Europäisches Patentamt

European Patent Office

Office européen des brevets

(19)

(11) Numéro de publication: **0 253 708**
**B1**

(12) **FASCICULE DE BREVET EUROPEEN**

(45) Date de publication du fascicule du brevet:
**18.07.90**

(21) Numéro de dépôt: **87401511.8**

(22) Date de dépôt: **30.06.87**

(51) Int. Cl.⁵: **B60G 7/00**

(54) Train arrière à action passive pour véhicule automobile et véhicule automobile équipé d'un tel train.

(30) Priorité: **10.07.86 FR 8610101**

(43) Date de publication de la demande:
**20.01.88 Bulletin 88/3**

(45) Mention de la délivrance du brevet:
**18.07.90 Bulletin 90/29**

(84) Etats contractants désignés:
**DE GB IT**

(56) Documents cités:
**DE-A- 1 931 490**
**FR-A- 1 372 829**
**FR-A- 2 552 374**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Galtier, Lucien Emilien Léon, 28, rue de Favigny, F-91390 Morsang s/Orge(FR)**
Inventeur: **Barthelemy, André Jean, 52, route de Limours, F-78470 St. Remy les Chevreuse(FR)**

(74) Mandataire: **Durand, Yves Armand Louis et al, Cabinet Z. Weinstein 20, Avenue de Friedland, F-75008 Paris(FR)**

ACTORUM AG

## Description

La présente invention concerne un train arrière pour véhicule automobile du type à bras oscillants tirés ou à triangees oscillants obliques, tirés.

Elle vise également un véhicule automobile équipé d'un tel traine arrière.

On sait que les trains arrière du type défini ci-dessus font l'objet d'un calage statique pour assurer le parallélisme des roues avec l'axe du train qui est également l'axe du véhicule.

On sait également que lorsqu'un tel train est soumis à des sollicitations transversales notamment en virage, la roue extérieure arrière du véhicule a tendance à prendre un angle d'ouverture par rapport à l'axe du véhicule. Ce phénomène résulte en général de l'ensemble des déformations du train et de ses attaches au véhicule, ce qui se traduit par un effet "survireur", indésirable en sortie du virage.

On connait déjà des trains arrière où chaque fusée de roue est reliée au support de roue, constitué par le bras oscillant tiré ou le triangle oscillant oblique tiré, par un moyen de pivotement à l'encontre d'un moyen élastique autour d'un axe approximativement vertical situé en arrière de l'axe de roue.

Un tel train, lorsque soumis aux sollicitations transversales en virage, permet à la roue extérieure de prendre un angle de pincement vers l'axe du véhicule entraînant un effet "sous-vireur", améliorant ainsi la condition de conduite du véhicule.

La présente invention a pour but d'améliorer la stabilité des agencements connus de trains arrière et de disposer de paramètres pour ajuster la flexibilité de l'ensemble.

Pour cela, la présente invention propose un train arrière pour véhicule automobile, du type où chaque fusée de roue est reliée au support de roue, par exemple à bras oscillant tiré ou à triangle oscillant oblique tiré, par l'intermédiaire d'un moyen de pivotement susceptible de pivoter, sous l'effet d'un effort latéral sur la roue, autour d'un axe approximativement vertical situé en arrière de l'axe de roue à l'encontre d'un moyen élastique et caractérisé en ce que le moyen de pivotement comprend un organe de support de la fusée de roue rigidement relié, par des moyens de fixation, au support de roue en arrière de l'axe de roue et comportant une partie flexible suivant l'axe vertical situé entre les moyens de fixation et l'axe de roue et en ce que le moyen élastique est disposé entre la partie de l'organe de support à l'opposé des moyens de fixation et le support de roue de manière à permettre la flexion de l'organe de support autour de l'axe vertical lorsque l'effort latéral sur la roue dépasse une valeur de seuil fixée par le moyen élastique.

Ainsi, le train arrière défini ci-dessus est agencé de manière qu'au-delà d'un seuil d'effort latéral la roue extérieure prenne un angle de pincement vers l'axe du véhicule entraînant l'effet "sous-vireur". De plus, le seuil d'effort latéral qui engendre l'angle de pincement ci-dessus est défini de manière à interdire tout flottement de la roue en ligne droite.

Selon une autre caractéristique de l'invention, l'organe de support de la fusée comprend deux pattes de fixation reliées au support de roue par les moyens de fixation précités et amincies au voisinage des moyens de fixation pour former des lames de flexion.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :

- les figures 1 et 2 représentent des vues schématiques de dessus d'un ensemble formant train arrière pour véhicule automobile conforme aux principes de l'invention ;
- la figure 3 représente en détail en vue de dessus le support de roue arrière gauche à bras oscillant tiré du train selon l'invention ; et
- la figure 4 est une vue suivant la flèche IV de la figure 3 sans le bras tiré.

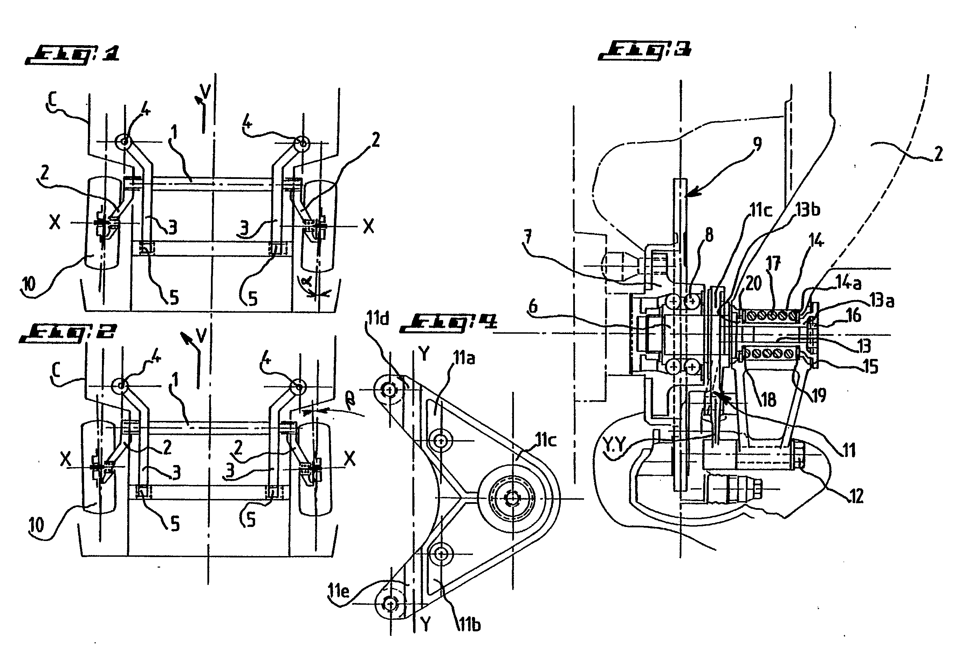

Le train arrière pour véhicule automobile représenté aux figures 1 et 2 comprend, comme cela est connu en soi, une traverse principale 1 située à l'avant de l'axe de roue X-X et sur laquelle s'articule les deux supports de roue 2 constitués dans le cas présent par deux bras oscillants tirés portant chacun la fusée de roue servant elle-même de support au moyeu de roue et au frein. Bien etendu, il est possible de prévoir à la place des bras tirés des triangles oscillants obliques tirés.

La traverse 1 est reliée rigidement à deux longerons 3, un gauche et un droit, sur lesquels repose la caisse C du véhicule par l'intermédiaire de quatre liaisons élastiques 4 et 5 supportant la charge verticale arrière du véhicule et réparties deux à l'avant et deux à l'arrière de l'axe de roue arrière X-X.

Les figures 3 et 4 représentent en détail la liaison fusée de roue 6 au bras tiré 2.

La fusée de roue 6 supportant le moyeu de roue 7, le roulement 8, le disque de frein-étrier 9 et la roue 10, est portée par un organe de support 11 qui est relié rigidement en arrière de l'axe de roue X-X au bras a par des moyens de fixation constitués dans le cas présent par des vis 12.

Plus précisément, l'organe de support 11 présente sensiblement la forme d'une plaque bifurquée comportant deux pattes de fixation 11a, 11b, dont les extrémités sont rigidement fixées au bras a par les vis de fixation 12 en arrière de l'axe X-X comme mentionné précédemment, tandis que la partie formant sommet 11c de la plaque supporte la fusée de roue 6.

L'organe de support 11 comprend une partie flexible suivant un axe approximativement vertical Y-Y situé entre les moyens de fixation 12 et l'axe de roue X-X et de préférence au voisinage des moyens de fixation. Cette partie flexible est en fait constituée par deux lames de flexion 11d et 11e formées en amincissant les deux pattes 11a et 11b au voisinage des moyens de fixation 12. Par cette conception, les pattes 11a et 11b peuvent travailler en lames de fixation suivant l'axe Y-Y.

L'organe de support 11 comprend de plus une bague latérale 13, solidaire de celui-ci au niveau de la partie formant sommet de la plaque bifurquée et disposée coaxialement à l'axe de roue X-X à l'opposé de la fusée de roue 6. La bague 13 est disposée dans un alésage traversant 14 du bras 2 et comporte une bride 15 à son extrémité tournée vers l'axe longitudinal du véhicule et qui, en position de repos, est séparée d'une partie correspondante du bras 2. Un écrou 16 est vissé dans la bride 15 pour le montage de la fusée 6 dans l'organe de support 11.

Un élément élastique constitué par un ressort de compression précontraint 17 est logé dans l'alésage 14 de manière à être disposé coaxialement autour de la bague 13 et prend appui par ses deux extrémités libres respectivement sur deux rondelles 18 et 19 d'un diamètre externe légèrement inférieur au diamètre de l'alésage 14 et d'un diamètre interne légèrement supérieur au diamètre externe de la bague 13.

La bague 13 comporte deux épaulements 13a et 13b axialement distants. A la position de repos ou position relative moyenne par rapport au support 2 et correspondant au parallélisme zéro en statique, représentée en figure 3, l'épaulement 13a est situé dans un même plan vertical par rapport à l'axe de roue X-X qu'un épaulement 14a de l'alésage du bras situé au voisinage de la bride 15 tandis que l'épaulement 13b est situé dans un même plan également perpendiculaire à l'axe de roue qu'un élément formant circlips interne 20 logé dans une rainure circulaire correspondante pratiquée dans le bras 2. L'épaulement 14a sert de butée à la rondelle 19 tandis que l'élément formant circlips 20 sert de butée à l'autre rondelle 18, les rondelles 18 et 19 prenant également appui, à la position représentée en figure 3, respectivement sur les épaulements 13b, 13a au niveau de leurs bords circulaires internes.

On comprend donc de la description qui précède que le ressort 17 tend à maintenir les parties axialement mobiles formées par la bague 13 et la fusée 6 dans une position relative moyenne par rapport à la partie fixe formée par le bras 2 de manière à constituer une liaison rigide de la fusée de roue 6 au bras 2 lorsque le véhicule se déplace en ligne droite ou qu'il se déplace dans un virage tant que les efforts latéraux appliqués à la roue ou accélérations latérales du véhicule ne dépassent pas une valeur prédéterminée définie par le tarage en position moyenne du ressort 17.

Les figures 1 et 2 montrent plus précisément le fonctionnement de l'agencement de train arrière selon l'invention et dans lesquelles le véhicule se déplace suivant la flèche V dans un virage à gauche.

En figure 1, lorsque l'accélération latérale du véhicule est inférieure ou égale à une valeur d'accélération prédéterminée, par exemple de 0,2 g, la roue extérieure a tendance à prendre l'angle d'ouverture α par rapport à l'axe longitudinal du véhicule, ceci résultant en général de l'ensemble des déformations du train et de ses attaches à la caisse du véhicule. Dans cette situation, et comme déjà mentionné précédemment, la liaison de la fusée de roue 6 au bras 2 reste rigide.

Lorsque l'accélération latérale du véhicule est supérieure à la valeur prédéterminée, par exemple de 0,2 g, comme représenté en figure 2, l'ensemble fusée de roue 6 - organe 11 et bague 13 est soumis à un effort axial et s'articule par flexion autour de l'axe Y-Y approximativement vertical contenu dans le plan vertical parallèle à l'axe de roue X-X et situé à l'arrière de cet axe. Dans ces conditions, l'ensemble fusée 6 - organe 11 et bague 13 se déplace axialement par rapport au bras 2 dans un sens ou dans l'autre, à partir d'un seuil d'effort donné par le tarage en position moyenne du ressort 17. Dans le cas présent, puisque le virage est à gauche, l'ensemble fusée 6 - organe 11 et bague 13 de la roue extérieure se déplace axialement vers l'axe longitudinal du véhicule tandis que l'ensemble fusée 6 - organe 11 et bague 13 de la roue intérieure se déplace axialement hors de l'axe longitudinal du véhicule et ce à l'encontre de la force de rappel du ressort 17 que se trouve ainsi écrasé par la bague 13 d'un côté et en butée sur le support 2 de l'autre côté.

Ainsi, l'articulation par flexion de l'ensemble fusée 6 - organe de support 11 - bague 13, autour de l'axe Y-Y, permet à partir d'un seuil d'accélération latérale du véhicule défini, d'obtenir un angle de pincement sur la roue extérieure au virage et un angle d'ouverture correspondant sur la roue intérieure au virage, d'une valeur prédéterminée, le seuil et la valeur de l'angle étant obtenus à l'aide du ressort de compression 17.

Selon une variante d'exécution, la liaison par le ressort peut se situer à l'avant de l'axe de roue afin de permettre le passage d'une transmission.

Selon l'invention, on a donc défini des moyens pour qu'au-delà d'un seuil d'effort latéral, la roue extérieure prenne un angle de pincement vers l'axe du véhicule entraînant un effet "sous-vireur".

La solution selon l'invention a l'avantage d'être extrême simple, et comporte un nombre de pièces mécaniques réduit, dont l'intervention en aprèsvente ne présente pas de conditions particulières. De plus, l'agencement de train arrière selon l'invention ne nécessite aucune intervention du conducteur, ou de mécanismes divers, agissant par analyses de positions, contraintes.

**Revendications**

1. Train arrière pour véhicule automobile du type où chaque fusée de roue est reliée au support de roue, par exemple à bras oscillant tiré ou à triangle oscillant oblique tiré, par l'intermédiaire d'un moyen de pivotement susceptible de pivoter, sous l'effet d'un effort latéral sur la roue, autour d'une axe approximativement vertical situé en arrière de l'axe de roue à l'encontre d'un moyen élastique, caractérisé en ce que le moyen de pivotement comprend un organe de support (11) de la fusée de roue (6) rigidement relié, par des moyens de fixation (12), au support de roue (2) en arrière de l'axe de roue (X-X) et comportant une partie flexible (11d, 11e) suivant l'axe vertical (Y-Y) situé entre les moyens de fixation (12) et l'axe (X-X) et en ce que le moyen élastique (17) est disposé entre la partie (11c) de l'organe de support (11) à l'opposé des moyens de fixation (12) et le support de roue (2) de manière à permettre la flexion de l'organe de support (11) autour de l'axe vertical (Y-Y) lorsque l'effort latéral sur la roue (10) dépasse une valeur de seuil fixée par le moyen élastique (17).

2. Train arrière selon la revendication 1, caractérisé en ce que l'organe de support (11) de la fusée (6) comprend deux pattes de fixation (11a, 11b) reliées au support de roue (2) par les moyens de fixation (12) précités et amincies au voisinage de ces moyens de fixation pour former des lames de flexion.

3. Train arrière selon la revendication 1 ou 2, caractérisé en ce que l'organe de support (11) précité comprend de plus une bague latérale (13) solidaire dudit organe disposée coaxialement à l'axe de roue (X-X) à l'opposé de la fusée (6) et s'engageant dans un alésage (14) du support de roue (2), et en ce que le moyen élastique (17) est un ressort précontraint monté coaxialement autour de la bague (13) de manière à maintenir celle-ci dans une position relative moyenne par rapport au support de roue (2) pour des efforts latéraux d'une valeur inférieure à la valeur de seuil précitée.

4. Train arrière selon l'une des revendications précédentes, caractérisé en ce que la bague (13) précitée comprend deux épaulements (13a, 13b) axialement distants respectivement situés, dans la position relative moyenne précitée, dans un même plan qu'un épaulement (14a) de l'alésage (14) précité du support de roue (2) servant de butée à une rondelle (19) et dans un même plan qu'un élément formant circlips interne (20) à l'alésage (14) servant de butée à une autre rondelle (18), le ressort précontraint (17) précité étant disposé entre les deux rondelles (18, 19) de telle sort qu'il soit en butée sur le support de roue (2) d'un côté et écrasé par la bague (13) de l'autre côté lorsque l'effort latéral précité dépasse la valeur précitée.

5. Véhicule automobile équipé d'un train arrière selon l'une des revendications 1 à 4.

**Patentansprüche**

1. Hinterachse für Kraftfahrzeug, derjenigen Gattung, bei welcher jeder Radachsschenkel mit dem Radträger, zum Beispiel mit gezogenem Schwingarm oder mit gezogenem schrägem Schwingdreieck, über ein Schwenkmittel verbunden ist, welches unter der Wirkung einer auf das Rad wirkenden Seitenkraft um eine hinter der Radachse liegende etwa lotrechte Achse entgegen einem elastischen Mittel verschwenkbar ist, dadurch gekennzeichnet, daß das Schwenkmittel ein über Befestigungsmittel (12) mit dem Radträger (2) hinter der Radachse (X-X) starr verbundenes und einen entlang einer zwischen den Befestigungsmitteln (12) und der Achse (X-X) liegenden lotrechten Achse (Y-Y) biegsamen Teil (11d, 11e) aufweisendes Tragglied (11) für den Radachsschenkel (6) umfaßt und daß das elastische Mittel (17) zwischen dem den Befestigungsmitteln (12) entgegengesetzten Teil (11c) des Traggliedes (11) und dem Radträger (2) angeordnet ist, um die Biegung des Traggliedes (11) um die lotrechte Achse (Y-Y) herum zu ermöglichen, wenn die auf das Rad (10) wirkende Seitenkraft einen durch das elastische Mittel (17) festgesetzten Schwellenwert überschreitet.

2. Hinterachse nach Anspruch 1, dadurch gekennzeichnet, daß das Tragglied (11) des Achsschenkels (6) zwei mit dem Radträger (2) durch die vorgenannten Befestigungsmittel (12) verbundene Befestigungspratzen (11a, 11b) umfaßt, welche im Bereich dieser Befestigungsmittel verdünnt sind, um Biegeblätter zu bilden.

3. Hinterachse nach Anspruch 1 oder 2, dadurch gekennzeichnet, daß das vorgenannte Tragglied (11) zusätzlich einen mit dem besagten Glied fest verbundenen, koaxial mit der Radachse (X-X) entgegengesetzt dem Radachsschenkel (6) angeordneten Seitenring (13) aufweist, welcher in eine Bohrung (14) des Radträgers (2) eingreift und daß das elastische Mittel (17) eine koaxial um den Ring (13) angeordnete vorgespannte Feder ist, um diesen in einer relativen mittleren Stellung in bezug auf den Radträger (2) für Seitenkräfte mit einem unterhalb des vorgenannten Schwellenwertes liegenden Wert zu halten.

4. Hinterachse nach einem der vorangehenden Ansprüche, dadurch gekennzeichnet, daß der vorgenannte Ring (13) zwei axial voneinander entfernte Schultern (13a, 13b) umfaßt, welche, in der vorgenannten relativen mittleren Lage jeweils in einer selben Ebene als eine als Anschlag für eine Unterlagscheibe (19) dienende Schulter (14a) der vorgenannten Bohrung (14) des Radträgers (2) und in einer selben Ebene als ein als Anschlag für eine andere Unterlagscheibe (18) dienendes Circlips Element (20) innerhalb der Bohrung (14) liegen, wobei die vorgenannte vorgespannte Feder zwischen den beiden Unterlagscheiben (18, 19) derart angeordnet ist, daß sie im Anschlag auf den Radträger (2) auf der einen Seite ist und durch den Ring (13) auf der anderen Seite zusammengedrückt wird, wenn die vorgenannte Seitenkraft den vorgenannten Wert überschreitet.

5. Mit einer Hinterachse gemäß einem der Ansprüche 1 bis 4 ausgerüstetes Kraftfahrzeug.

**Claims**

1. Rear axle for automotive vehicle of the type wherein each wheel axle stub is connected to the wheel support, for instance with a drawn oscillating arm or with a drawn oscillating triangle, through the medium of a pivot means susceptible of pivoting against an elastic means under the effect of a lateral effort upon the wheel about an approximately vertical axis located backwards of the wheel axis, characterized in that the pivot means comprises a support member (11) for the wheel axle stub (6) rigidly connected by fastening means (12) to the wheel support (2) backwards of the wheel axis (X-X) and comprising a portion (11d, 11e) flexible along the vertical axis (Y-Y) located between the fastening means (12) and the axis (X-X) and in that the elastic means (17) is disposed beween the portion (11c) of the support member (11) opposite to the fastening means (12) and the wheel support (2) so as to permit the bending of the support member (11) about the vertical axis (Y-Y) when the lateral effort upon the wheel (10) exceeds a threshold value set by the resilient means (17).

2. Rear axle according to claim 1, characterized in that the support member (11) for the axle stub (6) comprises two fastening lugs (11a, 11b) connected to

the wheel support (2) by the aforesaid fastening means (12) and made thinner in the vicinity of these fastening means to form bending blades.

3. Rear axle according to claim 1 or 2, characterized in that the aforesaid support member (11) comprises in addition a lateral ring (13) fast with the said member, disposed coaxially with the wheel axis (X–X) opposite to the axle stub (6) and engaging a bore (14) of the wheel support (2) and in that the elastic means (17) is a prestressed spring mounted coaxially about the ring (13) so as to maintain the latter in a relative mean position with respect to the wheel support (2) for lateral efforts of a value lower than the aforesaid threshold value.

4. Rear axle according to one of the preceding claims, characterized in that the aforesaid ring (13) comprises two axially spaced shoulders (13a, 13b) located in the aforesaid relative mean position in a same plane as a shoulder (14a) of the aforesaid bore (14) of the wheel support (2) serving as a stop to a washer (19) and in a same plane as a circlips forming element (20), respectively, inside of the bore (14) serving as a stop to another washer (18), the aforesaid prestressed spring (17) being disposed between both washers (18, 19) so that it be in abutment on the wheel support (2) on one side and squeezed by the ring (13) on the other side when the aforesaid lateral effort exceeds the aforesaid value.

5. Automotive vehicle fitted with a rear axle according to one of the claims 1 to 4.

**Fig. 1**

**Fig. 2**

**Fig. 3**

**Fig. 4**

EP 0 253 708 B1